**Europäisches Patentamt**

**European Patent Office**

**Office européen des brevets**

(11) Numéro de publication: **0 070 583**
A1

# DEMANDE DE BREVET EUROPEEN

(21) Numéro de dépôt: **82200799.3**

(22) Date de dépôt: **28.06.82**

(51) Int. Cl.³: **F 24 J 3/04**, F 24 J 3/02,
F 25 B 5/00

(30) Priorité: **10.07.81 BE 889576**

(71) Demandeur: **Van Dorst, Joannes Petrus Josephina,
Stationsstraat 119, B-2190 Essen (BE)**

(43) Date de publication de la demande: **26.01.83
Bulletin 83/4**

(84) Etats contractants désignés: **DE FR GB NL**

(72) Inventeur: **Van Dorst, Joannes Petrus Josephina,
Stationsstraat 119, B-2190 Essen (BE)**

(54) **Pompe de chaleur.**

(57) La pompe de chaleur perfectionnée comprend au moins une tubulure d'évaporation (4, 5) placée verticalement dans le sol (A). Le niveau du liquide évaporable là-dedans, varie entre une position haute et basse, de sorte que, malgré la pression hydrostatique, toute la proximité de la tubulure d'évaporation peut être utilisée comme source de chaleur tout au long de la tubulure. La variation du niveau est obtenue par les soupapes (7) et (8) et peut être dirigée par les détecteurs (9), respectivement (12) et (13) ou par un système d'horlogerie.

0070583

L'invention se situe dans le domaine des pompes de chaleur, plus spécialement du type dans lequel l'évaporateur ( contenant le liquide évaporable, par exemple le fréon-12 ) se compose de tubulures, pour la plupart verticales, qui se trouvent dans le sol.

Les tubulures peuvent être rectilignes ou avoir une forme "U". Comparez par exemple au brevet d'invention belge No. 816093 au nom de Vignal et Chapuis.

Vu que les tubulures de l'évaporateur peuvent atteindre une longueur verticale assez grande ( par exemple plus de 20 m ), il se produit , dans le liquide évaporable, une pression hydrostatique assez grande, dès une certaine profondeur, ainsi que le liquide évaporable ne peut plus s'évaporer, compte tenu de la température à cette profondeur. L'usage d'un décompresseur progressif au fond de l'évaporateur ne permet pas non plus de résoudre le problème de la pression hydrostatique, d'une manière satisfaisante.

Mon invention, elle permet d'évaporer à chaque profondeur, de sorte que toute la longueur de l'évaporateur devient utilisable. De cette manière, la temperature d'évaporation et le rendement de l'installation augmentent et le givrage éventuel de l'évaporateur, devient fort limité.

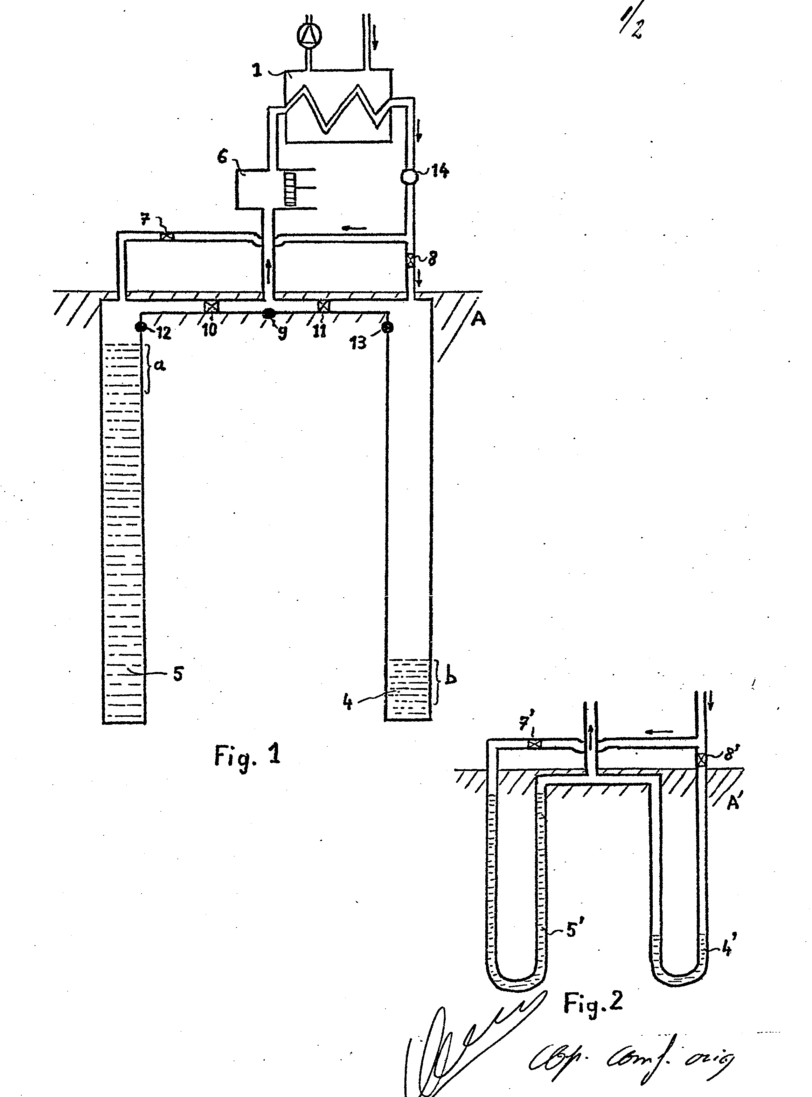

La fig.1 illustre le principe de l'invention. Le niveau du liquide évaporable (dans son état liquide), dans les tubulures de l'évaporateur (4) et (5), qui se trouvent dans le sol (A), varie (éventuellement à un rythme élevé), par quoi les zones supérieures (a) et (b), où la pression hydrostatique est faible et où par conséquent, l'évaporation est possible, se déplacent sur toute la hauteur des tubulures d'évaporation (4) et (5).

Donc, à des moments successifs, l'évaporation se fait toujours à des hauteurs différentes.

La vitesse d'alimentation du liquide évaporable, après le condenseur (1) vers les tubulures d'évaporation (4) et (5), est différente et réglée par des soupapes (7) et (8).

Si, par exemple, la soupape (7) est fermée et (8) ouverte, le niveau monte dans l'évaporateur (4) et descend dans (5).

En effet: l'aspiration des vapeurs par le compresseur (6) se fait sur les deux tubulures d'évaporation, quoique,
là aussi, les vitesses d'aspiration respectives, peuvent
varier entre elles, par les soupapes (10) et (11).
Cependant, la variation des vitesses d'alimentation reste l'essentiel. L'une des deux soupapes (7) et (8) peut
se fermer alternativement, mais il est aussi possible de
réduire une des deux vitesses d'alimentation sans la diminuer jusqu'à zéro.
La commande alternative des soupapes (7) et (8), et éventuellement (10) et (11), peut être réglée par une horloge.
De cette manière, l'inversion se fait régulièrement.
Cependant, il est aussi possible de constater, au moyen
d'un détecteur, que, par exemple, la tubulure (5) déborde,
et par conséquent de fermer la soupape (7) entièrement ou
partiellement et d'ouvrir la soupape (8).
Au lieu du détecteur (9), on peut aussi placer des détecteurs (12) et (13) sur ou dans chacune des tubulures (4)
et (5) pour constater que le niveau monte trop haut dans
une des tubulures.
On peut, par exemple, utiliser des détecteurs de température, montés à l'extérieur des tubulures ( le liquide
bouillant provoque une baisse de température).
Les soupapes (7) et (8) peuvent aussi servir de soupape
de détente, et, de cette manière, se charger entièrement
ou partiellement de la fonction du détendeur.
Le principe de mon invention peut s'appliquer aussi avec
des tubulures en "U".(fig. 2)
L'injection du liquide évaporable peut également être réalisée à un niveau plus bas ou au fond, au moyen des tubulures centrales (16") et (15"), par quoi l'huile de compression, qui se trouve dans le liquide, se laisse emmener plus facilement vers le haut. En haut les gouttes
d'huile et les vapeurs de fréon sont aspirés.
Il est également possible d'injecter en haut et en bas
(en combinaison) et la vitesse d'alimentation (réglée par
les soupapes (7) et (8) ou (7") et (8")) peut être variée
au choix dans le système d'injection en haut ou en bas,

0070583

ou dans les deux.

L'invention peut être appliquée à des évaporateurs avec plus de deux tubulures dans lesquelles le niveau est varié entre une position haute et basse.

Si on n'applique qu'une seule tubulure d'évaporation (5'''), la variation du niveau peut être obtenue par moyen d'un récipient (tampon) (17''').

Si le récipient (tampon) est utilisé comme évaporateur, les vapeurs peuvent être aspirés par le conduit (18''').

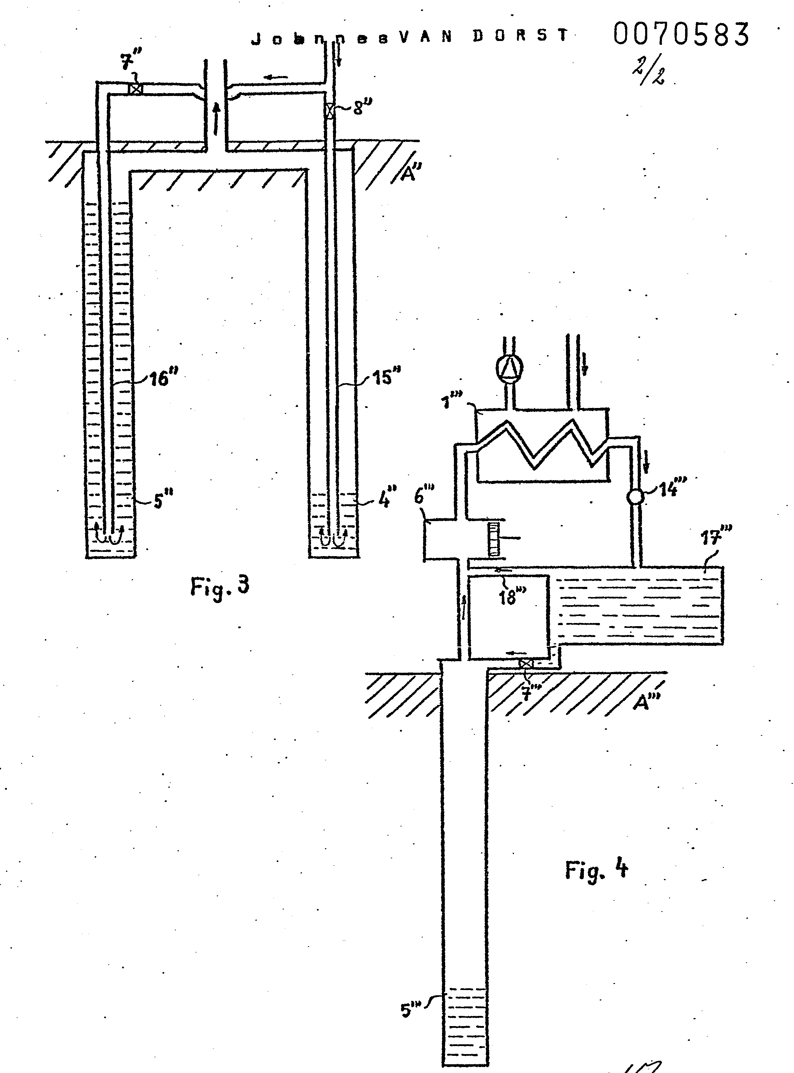

Je préfère les exécutions dáprès les fig.1, 2, et 3, parce que la seconde tubulure d'évaporation y est utilisée en même temps comme évaporateur à part entière et comme récipient (tampon).

Il est évident que les pompes de chaleur, que j'ai décrites auparavant, ne sont présentées que dans leur exécution la plus simple et qu'elles peuvent être complétées par des détecteurs supplémentaires, des commutateurs, des soupapes, des séparateurs d'huile, des appareils électriques etc. que j'utilise ordinairement dans des installations de ce genre.

Ce qui suit, ce sont mes : Revendications.

0070583

REVENDICATIONS

1) Pompe de chaleur, caractérisé en ce qu'elle comprend un évaporateur, de sorte que l'évaporateur contient au moins deux tubulures, qui se trouvent dans le sol ou ailleurs et dans une position principalement verticale et des dispositifs de réglage pour faire varier le niveau du liquide évaporable au sens opposé dans au moins deux tubulures, entre une position haute et basse, sur une grande partie de leur longueur.

2) Pompe de chaleur suivant la revendication 1, caractérisé en ce que le débit d'alimentation vers les tubulures d'évaporation est réglé au moyen de soupapes, qui sont commandées par des détecteurs qui constatent le niveau haut du liquide évaporable dans une des tubulures.

3) Pompe de chaleur suivant la revendication 1, caractérisée en ce que une horloge commande l'inversion des soupapes, qui règlent l'alimentation vers les tubulures d'évaporation.

4) Pompe de chaleur, caractérisée en ce que l'installation contient un récipient tampon et des dispositifs de réglage, pour faire varier le niveau du liquide d'évaporation dans la tubulure d'évaporation verticale sur une grande partie de sa longueur, et le niveau dans le récipient tampon dans un sens opposé.

5) Pompe de chaleur principalement comme je l'ai décrite auparavent et comme je la représente dans les dessins ci-joints.

Joannes VAN DORST

0070583

1/2

Fig. 1

Fig.2

Fig. 3

Fig. 4

0070583

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 931 485 (R. ÖTJENGERDES) *Revendications 1, 1.15; page 5, point 5; figures 1,4* | 1,3 | F 24 J 3/04 <br> F 24 J 3/02 <br> F 25 B 5/00 |
| | --- | | |
| Y | FR-A- 893 120 (HERMES G.M.B.H.) *Page 2, lignes 25-92; figures 1,2* | 1,3 | |
| | --- | | |
| A | APPLIED ENERGY, volume 4, 1978, Applied Science Publishers Ltd., (GB) 1978 J.R. GOULBURN et al.: "Deep ground coil evaporators for heat pumps", pages 293 – 313. *Pages 304-311* | 1 | |
| | --- | | |
| A | FR-A-1 136 296 (THOMPSON-HOUSTON) *Page 8, colonne de droite, ligne 23 – page 9, colonne de gauche, ligne 19; figure 13* | 4 | DOMAINES TECHNIQUES RECHERCHES (Int. Cl. ³) |
| | --- | | |
| A | DE-A-2 216 482 (H. LOTZ) *Document entier* | 4 | F 24 J <br> F 25 B |
| | --- | | |
| A | CH-A- 224 584 (SULZER) *Page 2, lignes 51-77; figures 1,2* | 4 | |
| | --- | | |
| D,A | BE-A- 816 093 (M. VIGNAL et al.) | | |
| | --- | | |
| | -/- | | |

Le présent rapport de recherche a été établi pour toutes les revendications

| Lieu de la recherche | Date d'achèvement de la recherche | Examinateur |
|---|---|---|
| LA HAYE | 12-10-1982 | SILVIS H. |

Office européen
des brevets

RAPPORT DE RECHERCHE EUROPEENNE

Numero de la demande

EP 82 20 0799

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int. Cl. 3) |
|---|---|---|---|
| A | GB-A- 638 947 (R.C. WEBBER) | | |
| A | DE-C- 673 899 (K. SCHMIDT) | | |

DOMAINES TECHNIQUES
RECHERCHES (Int. Cl. 3)

Le présent rapport de recherche a été établi pour toutes les revendications

| Lieu de la recherche | Date d'achèvement de la recherche | Examinateur |
|---|---|---|
| LA HAYE | 12-10-1982 | SILVIS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille. document correspondant

OEB Form 1503 03 82